# NEW EUROPEAN PATENT SPECIFICATION

(11) **EP 0 656 289 B2**
(45) Date of publication and mention of the opposition decision: **27.08.2003**
(45) Mention of the grant of the patent: 19.02.1997
(21) Application number: 94830527.1
(22) Date of filing: 04.11.1994
(51) Int. Cl.: B60S 3/06, F16D 1/033

(54) **Tubular element for supporting washing brushes, for application to automatic motor-vehicle washing systems and the like**
Rohrförmiges Element für die Befestigung von Waschbürsten, zur Anwendung bei automatischen Fahrzeugwaschanlagen oder dergleichen
Elément tubulaire pour le support de brosses de lavage, pour l'utilisation dans des installations de lavage automatique de véhicules ou analogues

(30) Priority: 02.12.1993 IT MI932532
(43) Date of publication of application: 07.06.1995
(73) Proprietor: FAVAGROSSA EDOARDO S.r.l., I-26040 Roncadello (Cremona) (IT)
(72) Inventor: Favarossa, Edoardo, I-26040 Roncadello (Cremona) (IT)
(74) Representative: Lorenz, Werner, Dr.-Ing.

(56) References cited:
- FR-A- 1 352 797
- US-A- 1 807 765
- US-A- 3 793 663
- Prior use of tube according to drawing N. 1022814, ordered 02.08.89 and offer made on 15.08.89 by BUG-Aulutechnik
- Prior use of tube according to drawing N.1022833 according to offer made by Hoogavens Aluminium Profiltechnik GmbH

## Description

### BACKGROUND OF THE INVENTION

The present invention relates to a tubular element for supporting washing brushes, for application to automatic motor vehicle washing systems and the like.

As is known, in motor vehicle automatic washing systems there are conventionally used washing brushes, of large size, which practically comprise a cylindric body on the surface of which there are applied plate-like elements, provided with bristles, which are circumferentially arranged on the cylindric body.

The cylindric body, in particular, comprises an iron tubular element which, as it is made, must be cut to a desired size, and then subjected to an operation step in which a flange is applied to one end of the tubular element, as the latter has a vertical axis, or two flanges are applied to the end portions of said tubular element, as the latter has a horizontal axis.

These flanges, which are applied to the end portions of the tubular element, are then subjected to a welding step for making rigid the flanges with said tubular body, said flanges being used for coupling a respective driving electric motor.

After this operation, the tubular body is subjected to a straightness test, since the welding operation is susceptible to cause disalignments and, accordingly, it is necessary to perform a specific operation for re-aligning the outer surface of the tubular element by applying, by a suitable torch, a weld recovering material for recovering the outer surface of the tubular element to a perfectly rectilinear condition.

Thus, for making that prior tubular element, are necessary several operating steps, which are very expensive and which must be performed by skilled operators.

### SUMMARY OF THE INVENTION

Accordingly, the aim of the present invention is to solve the above mentioned problem, by providing a tubular element for supporting washing brushes, specifically designed for motor vehicle automatic washing systems, which tubular element can be directly coupled to the motor connecting flanges without the need of performing complex processing step thereon.

Within the scope of the above mentioned aim, a main object of the present invention is to provide such a tubular element which can be connected in a very quick and safe manner to the motor assembly coupling flanges, the connection practically requiring exclusively screwing-on operations.

Another object of the present invention is to provide such a tubular element which, owing to its constructional features, is very reliable and safe in operation.

Yet another object of the present invention is to provide such a tubular element which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a tubular element for supporting washing brushes, particularly designed for motor vehicle automatic washing systems, characterized in that said tubular element comprises an extruded tubular body, of circular, square or polygonal cross-section, provided with integral longitudinal ribs on an inner surface thereof, in said ribs there being provided recesses for engaging therein affixing means for connecting coupling flange means for coupling an electric motor to rotatively drive said tubular body.

### BRIEF DESCRIPTION OF THE DRAWINGS

Further characteristics and advantages of the present invention will become more apparent hereinafter from the following detailed disclosure of a preferred, though not exclusive, embodiment of a tubular element for supporting washing brushes, specifically designed for motor vehicle automatic washing systems, which has been illustrated, by way of an indicative, but not limitative example, in the figures of the accompanying drawings, where:
Figure 1 illustrates a tubular element according to the invention arranged in a vertical position, a single flange being coupled to said tubular element;
Figure 2 illustrates the subject tubular element, arranged in a horizontal position and to which there are coupled two flanges;
   and

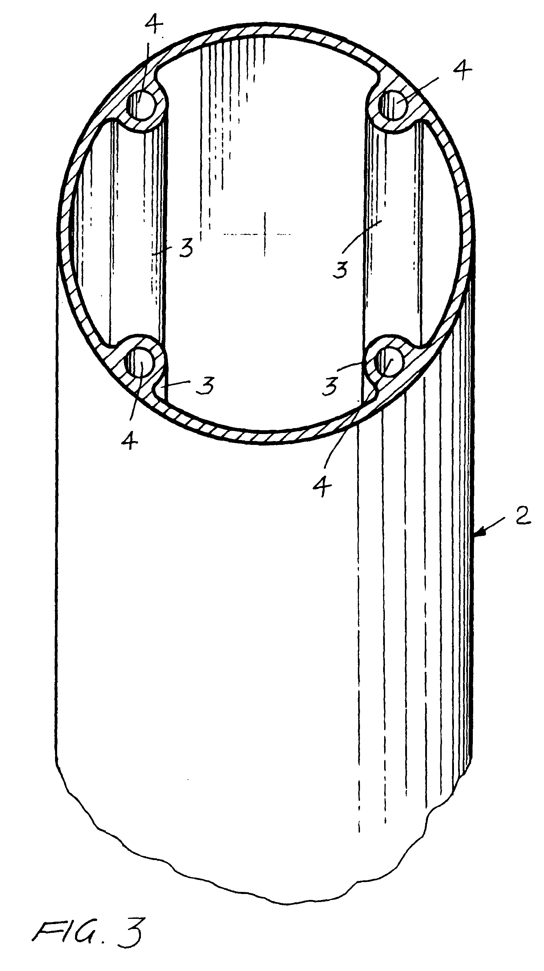

Figure 3 is a schematic cross-sectional view illustrating the tubular element according to the present invention.

### DESCRIPTION OF THE PREFERRED EMBODIMENTS

With reference to the number references of the above mentioned figures, the tubular element for supporting washing brushes, specifically designed for motor vehicle automatic washing systems, according to the present invention, which has been generally indicated at the reference number 1, comprises a tubular body 2, the main feature of which is that it is made by extruding an aluminium material.

The aluminium extruded piece defines, in the inner surface thereof, ribs 3 which are advantageously evenly spaced, and define in their inside a longitudinal hollow 4 for receiving coupling means for coupling a flange 10, to be connected to an electric motor assembly 11.

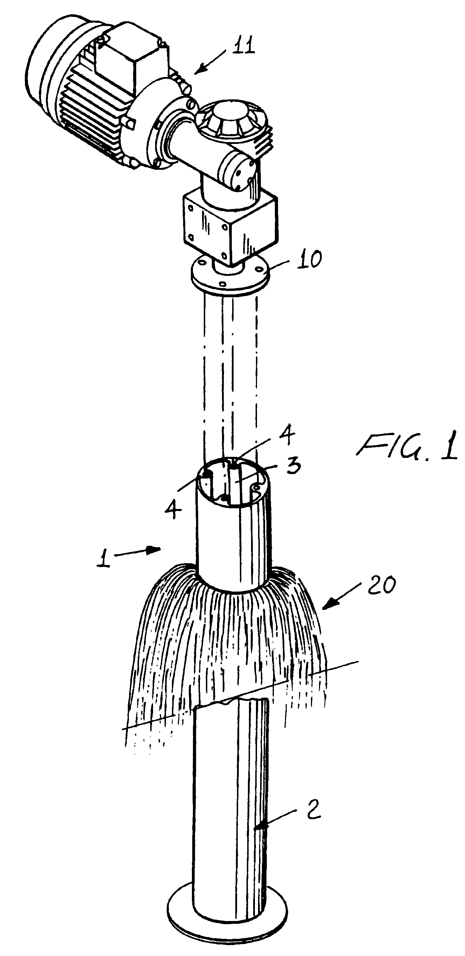

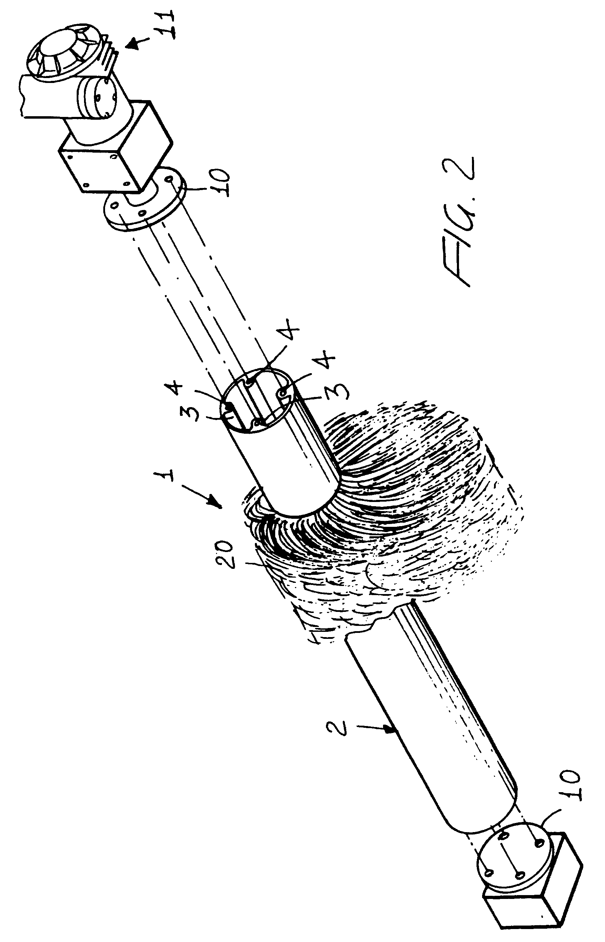

As shown in figures 1 and 2, in the case of a tubular element used for a vertically arranged brush, there is applied a single flange, whereas, in the case of a tubular element for supporting a horizontally arranged brush, there are provided two flanges 10, respectively each arranged at a respective end of the tubular element.

The means for coupling the flange 10 are constituted by screws, to be engaged in the hollow 4, so as to quickly and easily connect the flange without the need of performing other coupling operations.

Moreover, it is not necessary to perform surface finishing operations since the tubular element, according to the invention, is made of a stainless "anticorodal" aluminium material, which does not require any zinc-plating or painting operations, as conventionally used for the prior iron tubular elements.

On the thus made tubular element 2, as is conventional, there will be then arranged the conventional plate-like elements, provided with bristles, and generally indicated at the reference number 20.

From the above disclosure it should be apparent that the invention fully achieves the intended aim and objects.

In particular, it is to be pointed out that, by using an extruded aluminium tubular body, it is possible to directly form, in a single piece with the tubular element, the mentioned ribs which, being provided with a longitudinal hollow, will directly constitute the seat for engaging therein the mentioned flange coupling means.

The invention as disclosed is susceptible to several modifications and variations, all of which will come within the scope defined by the claims.

In practising the invention, the used materials, provided that they are compatible to the intended use, as well as the contingent size and shapes, can be any, depending on requirements.

## Claims

1. A tubular element (2) for supporting washing brushes (20), particularly designed for motor vehicle automatic washing systems, said tubular element (2) comprising a single extruded tubular body, of circular, cross-section, provided with integral longitudinal ribs (3) on an inner surface thereof, in said ribs (3) there being provided recesses (4) for engaging therein affixing means for connecting coupling flange means (10) for coupling an electric motor (11) to rotatively drive said tubular body, said ribs (3) directly projecting in an approximately semi-circular way from the inner surface of said tubular element (2) into the inside of said tubular element (2), and said recesses (4) being formed by closed circular section cylindrical hollows.

2. A tubular element, according to Claim 1, **characterized in that** said tubular body (2) is made of an aluminium material or an aluminium alloy material.

3. A tubular element, according to Claim 1, **characterized in that** said ribs (3) are provided with a longitudinal hollow (4) for engaging therein the flange coupling means (10).

4. A tubular element, according to Claim 3, **characterized in that** said flange coupling means (10) comprise screw means, which can be engaged in holes defined on said flange (10) and in said longitudinal hollow (4).

## Patentansprüche

1. Röhrenförmiges Teil (2) zum Tragen von Waschbürsten (20), das insbesondere für den Einsatz in automatischen Waschsystemen für Kraftfahrzeuge erdacht wurde, wobei das röhrenförmige Teil (2) einen einzelnen extrudierten röhrenförmigen Körper kreisförmigen Querschnitts besitzt, der mit daraus ausgebildeten längsseitig ausgerichteten Rippen (3) auf einer inneren Oberfläche davon ausgestattet ist, wobei in diesen Rippen (3) Aushöhlungen (4) bereitgestellt sind, um darin Befestigungsvorrichtungen zur Verbindung von Flanschkupplungsteilen (10) einzulassen, um einen Elektromotor (11) zur Drehantriebsverbindung mit diesem röhrenförmigen Körper daran anzuschließen, und wobei die Rippen (3) direkt an der inneren Oberfläche des röhrenförmigen Teils (2) angeformt sind und sich wenigstens annähernd halbkreisförmig in das Innere des röhrenförmigen Teils (2) erstrecken, und wobei die Aushöhlungen (4) eine geschlossene Kreisform aufweisen.

2. Röhrenförmiges Teil nach Anspruch 1,
**dadurch gekennzeichnet, dass** dieser röhrenförmige Körper (2) aus einem Aluminiummaterial oder einer Aluminiumlegierung hergestellt ist.

3. Röhrenförmiges Teil nach Anspruch 1,
**dadurch gekennzeichnet, dass** diese Rippen (3) mit einer längsseitigen Aushöhlung (4) ausgestattet sind, um die Flanschkupplungsvorrichtungen (10) darin aufzunehmen.

4. Röhrenförmiges Teil nach Anspruch 3,
**dadurch gekennzeichnet, dass** diese Flanschkupplungsvorrichtungen (10) Schraubenvorrichtungen umfassen, die in Löchern eingelassen werden können, die auf diesem Flansch (10) und in dieser längsseitigen Aushöhlung (4) ausgebildet sind.

## Revendications

1. Un élément tubulaire (2) pour supporter des brosses de lavage (20), spécifiquement dessiné pour des systèmes de lavage automatiques pour automobiles, ledit élément tubulaire (2) avant compris un seul corps tubulaire extrudé de coupe transversale circulaire, carrée ou polygonale, doté sur sa surface interne d'arêtes longitudinales (3) qui en font partie, dans lesdites arêtes (3) étant mis en place des creux (4) adaptés à recevoir des moyens de fixation pour y fixer un dispositif de couplage à bride (10) pour le couplage d'un moteur électrique (11) pour l'entraînement rotatif dudit corps tubulaire, et les arêtes (3) étant directement fixés à la surface interne de l'élément tubulaire (2) et qui s'entendent au moins d'une façon approximativement semi-circulaire dans l'intérieur de l'élément tubulaire (2) et dont les creux (4) possèdent la forme d'un cercle fermé.

2. Un élément tubulaire selon la revendication 1,
**caractérisé en ce que** ledit corps tubulaire (2) est fait à partir d'un matériau à base d'aluminium ou d'un matériau à base d'alliage d'aluminium.

3. Un élément tubulaire selon la revendication 1,
**caractérisé en ce que**
lesdites arêtes (3) sont pourvues d'un creux longitudinal (4) adapté à recevoir le dispositif de couplage à bride (10).

4. Un élément tubulaire selon la revendication 3,
**caractérisé en ce que**
ledit dispositif de couplage à bride (10) comprend des dispositifs à vis qui peuvent s'engager dans des ouvertures formées à la fois dans lesdites brides (10) et dans ledit creux longitudinal (4).
